# EUROPÄISCHE PATENTSCHRIFT

(11) **EP 2 483 095 B1**
(45) Veröffentlichungstag und Bekanntmachung des Hinweises auf die Patenterteilung: **20.08.2014**
(21) Anmeldenummer: 10779214.5
(22) Anmeldetag: 29.09.2010
(51) Int. Cl.: B60J 7/12

(54) **SOFTTOP VERDECK EINES CABRIOLET-FAHRZEUGS**
SOFTTOP FOR A CABRIOLET VEHICLE
TOIT SOUPLE POUR UN VÉHICULE CABRIOLET

(30) Priorität: 02.10.2009 DE 102009048141
(43) Veröffentlichungstag der Anmeldung: 08.08.2012
(73) Patentinhaber: Valmet Automotive Oy, 23500 Uusikaupunki (FI)
(72) Erfinder: HOLLENBECK, Sven, 49492 Westerkappeln (DE); THEUERKAUF, Jürgen, 49565 Bramsche (DE); RADEMACHER, Udo, 49084 Osnabrück (DE); BUCHBERGER, Ingo, 49170 Hagen a. T. W. (DE)
(74) Vertreter: Kronthaler, Wolfgang N.K.
(86) Internationale Anmeldenummer: PCT/DE2010/001149
(87) Internationale Veröffentlichungsnummer: WO 2011/038721

(56) Entgegenhaltungen:
- EP-A2- 0 855 302
- EP-A2- 1 366 942
- DE-A1- 19 642 191
- US-A- 2 752 192
- US-A- 6 120 087

## Beschreibung

Die Erfindung betrifft ein Soft-Top-Verdeck eines Cabriolet-Fahrzeugs, welches zwischen einer einen Fahrgastraum überdeckenden, geschlossenen Position und einer den Fahrgastraum freigebenden, offenen Position überführbar ist, wobei ein Verdeckbezug wenigstens bereichsweise verschiebbar an dem Spannbügel angeordnet ist.

Aus der Praxis sind Soft-Top-Verdecke bekannt, bei denen der Verdeckbezug den Spannbügel umschlingt und bei denen ein Ende des Verdeckbezugs nach Umschlingung des Spannbügels über eine Nähnaht oder eine Schweißnaht fest mit dem Verdeckbezug verbunden ist. Der Verdeckbezug ist bei diesen bekannten Verdecken in Erstreckungsrichtung des Spannbügels fest an diesem angeordnet.

Bei einer Verdecköffnungs- oder schließbewegung können dabei große auf den Verdeckbezug wirkende Spannungen auftreten, welche unter Umständen zu einer Beschädigung des Verdeckbezugs führen können.

Um derartige Spannungen an dem Verdeckbezug zu verhindern oder zu reduzieren, ist es bekannt, den Verdeckbezug mittels eines Keders in einer in dem Spannbügel ausgebildeten Führungsnut anzuordnen. Die Führungsnut hat dabei einen größeren Durchmesser als der Keder, so dass der Keder bei einer Verdecköffnungsbewegung oder Verdeckschließbewegung in der Führungsnut zusammengestaucht werden kann, womit eine Verschiebung des Verdeckbezugs in Erstreckungsrichtung des Spannbügels möglich ist.

Eine derartige Lösung ist allerdings konstruktiv aufwendig und benötigt einen relativ großen Bauraum.

Aus der EP 0 855 302 A2 ist ein Faltverdeck mit einem Verdeckbezug bekannt, wobei ein unterer heckseitiger Rand des Verdeckbezugs mit einem schwenkbaren U-förmigen Stoffhaltebügel verbunden ist. Seitliche Verdeckbezugbahnen des Verdeckbezugs sind in ihrem jeweiligen Randbereich mittels einer Gleitführung von der unmittelbaren Befestigung an U-Schenkeln des Stoffhaltebügels entkoppelt. Die Gleitführung weist einen mit den seitlichen Verdeckbezugbahnen verbundenen Schlitten auf, welcher wiederum in einer an dem Stoffhaltebügel angeordneten Schiene gelagert und in dieser längsverschieblich ist. In geschlossener Verdeckposition ist der Schlitten in einem vorderen Bereich der Schiene in der Nähe eines Haltewinkels angeordnet. Bei einer Verdecköffnungsbewegung wird der Schlitten in der Schiene heckwärts verlagert.

Es ist Aufgabe der vorliegenden Erfindung, ein Soft-Top-Verdeck eines Cabriolet-Fahrzeugs mit einem Verdeckbezug zu schaffen, bei dem die Gefahr von Beschädigungen des Verdeckbezugs bei einer Verdecköffnungsbewegung oder einer Verdeckschließbewegung auf konstruktiv einfache Weise reduziert ist.

Diese Aufgabe wird mit einem Soft-Top-Verdeck eines Cabriolet-Fahrzeugs nach den Merkmalen des Patentanspruches 1 gelöst.

Vorteilhafte Weiterbildungen eines Soft-Top-Verdecks nach der Erfindung ergeben sich aus den Unteransprüchen.

Die Erfindung sieht somit ein Soft-Top-Verdeck eines Cabriolet-Fahrzeugs vor, welches zwischen einer einen Fahrgastraum überdeckenden, geschlossenen Position und einer den Fahrgastraum freigebenden, offenen Position überführbar ist, wobei ein Verdeckbezug wenigstens bereichsweise in Erstreckungsrichtung des Spannbügels in wenigstens einem Verschiebebereich des Spannbügels verschiebbar an dem Spannbügel angeordnet ist.

Erfindungsgemäß ist die Verschiebbarkeit des Verdeckbezugs in dem wenigstens einen Verschiebebereich des Spannbügels ausschließlich durch eine wenigstens einen Teil des Spannbügels vollständig umfassende Umschlingung des Spannbügels mit dem Verdeckbezug realisiert.

Mit der erfindungsgemäßen Lösung wird eine Beschädigung des Verdeckbezugs durch eine auf konstruktiv einfache und kostengünstige Weise realisierte Verschiebbarkeit des Verdeckbezugs an dem Spannbügel, welche einem Vorhangstange-Schlaufenvorhang-Prinzip ähnlich ist, verhindert. Insbesondere bei Verdecken mit einer geringen Verdecklänge zwischen einer unteren Ecke einer Heckscheibe des Verdecks und einem vorderen Ende des Spannbügels können während einer Verdeckbewegung auf den Verdeckbezug wirkende Kräfte reduziert und eine Beschädigung des Verdeckbezugs effektiv unterbunden werden.

Gegenüber einer Lösung mit einem in einer Führungsnut geführten Keder kann mit der Erfindung vorteilhafterweise Bauraum eingespart werden, welcher bei der Lösung mit dem Keder insbesondere für das Vorsehen der Führungsnut benötigt wird.

Weiterhin bietet das erfindungsgemäße Soft-Top-Verdeck den Vorteil einer großen Verschiebbarkeit des Verdeckbezugs und somit einer großen Flexibilität, da die Verschiebbarkeit des Verdeckbezugs nicht wie bei der Kederlösung durch das Verhältnis der Durchmesser der Führungsnut und des Keders und die dadurch begrenzte Stauchbarkeit des Keders in der Führungsnut beschränkt ist.

Die gewünschte Verschiebbarkeit des Verdeckbezugs kann durch entsprechende Anordnung des Verschiebebereichs an dem Spannbügel bei der Erfindung vorteilhafterweise flexibel gewählt werden.

Zudem ermöglicht die Erfindung eine einfache Anlage einer Staubschutzeinrichtung an dem Verdeckbezug und ist hierbei insbesondere bei einem Cabriolet-Fahrzeug vorteilhaft, bei dem der Spannbügel bis an den äußeren Rand der Fahrzeugkarosserie heranreicht, so dass wenig Fahrzeugbreite zwischen dem Spannbügel und der Fahrzeugaußenseite verbleibt.

Bei einer vorteilhaften Weiterbildung der Erfindung ist es vorgesehen, dass der wenigstens eine Verschiebebereich im Bereich wenigstens eines verdeckfrontseitigen Endes des Spannbügels angeordnet ist. Eine Verschiebbarkeit des Verdeckbezugs in diesem Bereich erwies sich als ausreichend, da die größten Spannungen des Verdeckbezugs bei einer Verdecköffnungs- oder schließbewegung in diesen Bereichen des Verdeckbezugs auftreten.

Weiterhin kann der Verdeckbezug in einem hinteren Bereich fest, d. h. in Erstreckungsrichtung des Spannbügels fixiert, mit dem Spannbügel verbunden werden, womit eine definierte Position des Verdeckbezugs gegenüber dem Spannbügel sichergestellt werden kann. Dies ist insbesondere wichtig, um zu verhindern, dass eine in dem Verdeckbezug angeordnete Heckscheibe in geschlossener Verdeckposition eine ungewünschte, beispielsweise schiefe Position einnehmen kann, welche auftreten könnte, wenn sich der Verdeckbezug in seinem heckseitigen Bereich gegenüber dem Spannbügel verschieben würde.

Bei einer einfachen Ausgestaltung der Erfindung kann der Verdeckstoff den Spannbügel mit einer gleichmäßig ausgestalteten Lasche sowohl in dem Verschiebebereich als auch in einem Fixierbereich des Spannbügels, in welchem der Verdeckstoff in Erstreckungsrichtung des Spannbügels fest an dem Spannbügel angeordnet ist, umschlingen.

Um ein einfaches Verrutschen des Verdeckbezugs in dem Verschiebebereich des Spannbügels zu gewährleisten, kann es bei einer weiteren Ausbildung eines erfindungsgemäßen Soft-Top-Verdecks auch vorgesehen sein, dass der Spannbügel in dem wenigstens einen Verschiebebereich lockerer von dem Verdeckstoff umschlungen ist als in dem Fixierbereich.

Der Fixierbereich des Spannbügels ist bei dem U-förmig ausgebildeten Spannbügel zweckmäßigerweise zwischen zwei Verschiebebereichen des Spannbügels angeordnet, welche sich jeweils im Bereich eines verdeckfrontseitigen Endes des Spannbügels befinden.

Eine definierte Festlegung des wenigstens einen Verschiebebereichs des Spannbügels ist auf konstruktiv einfache Weise realisiert, wenn der Spannbügel zweiteilig, mit zwei im Wesentlichen parallel zueinander verlaufenden Spannbügelteilen ausgebildet ist, wobei ein erster Spannbügelteil einem Fahrgastraum zugewandt und ein zweiter Spannbügelteil einem Fahrgastraum abgewandt und von dem ersten Spannbügelteil wenigstens in dem Verschiebebereich des Verdeckbezugs beabstandet angeordnet ist, und wobei das erste Spannbügelteil von dem Verdeckbezug vollständig umschlungen ist. Der erste Spannbügelteil verläuft dann vorzugsweise bis auf einen S-förmigen Bereich, welcher den Abstand zwischen dem ersten und zweiten Spannbügelteil herstellt, parallel zu dem zweiten Spannbügelteil.

Wenn eine ein Ende des Verdeckbezugs nach Umschlingung des ersten Spannbügelteils an dem Verdeckbezug festlegende Naht unterhalb des Spannbügels angeordnet ist, ist diese vorteilhafterweise von außen nicht sichtbar an dem Spannbügel angeordnet. Eine derartige Anordnung der Naht stellt eine unter optischen Gesichtspunkten vorteilhafte Ausgestaltung der Erfindung dar.

Die das Ende des Verdeckbezugs mit dem Verdeckbezug verbindende und somit die Lasche bildende Naht ist bei einer vorteilhaften Ausgestaltung eines erfindungsgemäßen Soft-Top-Verdecks als Schweißnaht ausgebildet, wobei sie bei einer alternativen Ausbildung der Erfindung auch als Nähnaht oder dergleichen ausgebildet sein kann.

Um zu verhindern, dass der Verdeckbezug über wenigstens ein verdeckfrontseitiges Ende des Spannbügels hinausbewegt werden kann, kann bei einer Weiterbildung der Erfindung wenigstens an einem verdeckfrontseitigen Ende des Spannbügels eine Begrenzungseinrichtung vorgesehen sein.

Die Begrenzungseinrichtung kann dabei beispielsweise als Stift oder Schraube ausgebildet sein, welche bei einem zweiteilig ausgebildeten Spannbügel insbesondere durch beide Spannbügelteile hindurchführt und diese verbindet, womit ein Verschieben der beiden Spannbügelteile gegeneinander verhindert ist und zudem eine Stabilität eines derartigen Spannbügels vorteilhafterweise erhöht ist. Gleichzeitig kann diese Schranke oder sonstige starre Verbindungseinrichtung der Anbindung des Spannbügels an die Fahrzeugkarosserie dienen.

Wenn in einem dem Fahrgastraum abgewandten Bereich des Spannbügels ein Wassertasche an dem Verdeckbezug angeordnet ist, kann auf einfache Weise das Eindringen von Flüssigkeit, insbesondere Regenwasser, in den Fahrgastraum verhindert werden. Die Wassertasche ist bei einer vorteilhaften Ausbildung der Erfindung in einem Arbeitsgang mit der Festlegung des Endes des Verdeckbezugs an dem Verdeckbezug, d.h. der Bildung der Lasche, über die gleiche Naht festgelegt.

Um auch eine Beschädigung des Verdeckbezugs bei Soft-Top-Verdecken mit einer geringen zwischen einer C-Säule des Cabriolet-Fahrzeugs und dem Spannbügel vorliegenden Verdecklänge zu verhindern, kann bei einer vorteilhaften Weiterbildung der Erfindung der Spannbügel mit wenigstens einem verdeckfrontseitigen Ende karosseriefest angeordnet und bei einer Überführung des Verdecks von seiner geschlossenen Position in seine offene Position mit seinen verdeckfrontseitigen Enden nach unten verlagerbar sein.

Eine derartige Verlagerbarkeit des Spannbügels mit seinen verdeckfrontseitigen Enden ist bei einer vorteilhaften Weiterbildung der Erfindung dadurch umgesetzt, dass der Spannbügel zu seiner Verlagerung bei einer Überführung des Verdecks zwischen seiner geschlossenen Position und seiner offenen Position mit seiner Begrenzungseinrichtung in einer karosseriefest angeordneten Kulissenführung gelagert ist. Die Kulissenführung kann dabei an einem Hauptlager des Verdecks angeordnet oder integral mit dem Hauptlager des Verdecks ausgebildet sein. Ein Vorteil des Vorsehens einer Kulissenführung ist, dass dabei kaum Verschraubungen und somit auch nur geringe Nacharbeiten nötig sind.

Der Spannbügel kann derart karosseriefest angeordnet sein, dass die Schwerkraft den Spannbügel bei einer Überführung des Verdecks von dem geschlossenen Zustand in den offenen Zustand von einer oberen Position in eine unter Position verlagert, während der Spannbügel bei einer Überführung des Verdecks von dem offenen Zustand in den geschlossenen Zustand mittels einer Stoffspannung des Verdeckbezugs in seine obere Position in der Kulissenführung verlagert wird. Hierbei ist vorteilhafterweise keine separate Einrichtung oder Anbindung an ein Hauptlager des Verdecks zur Bewegung des Spannbügels nötig.

Um eine feste und positionssichere Lagerung des Spannbügels sicherzustellen, kann der Spannbügel an seinem verdeckheckseitigen Ende in einem wenigstens annähernd verdeckmittigen Bereich mittels eines Halteelements karosseriefest festgelegt sein.

Bei einer Bewegung des Spannbügels mit seinem verdeckfrontseitigen Ende wenigstens annähernd in Verdeckhochrichtung entsteht an dem verdeckheckseitigen Ende des Spannbügels eine Drehbewegung des Spannbügels. Bei einer einfachen Ausbildung der Erfindung wird diese dadurch ermöglicht, dass der Spannbügel mittels eines Gleitsteins in einem in Verdeckhochrichtung verlaufenden Langloch des Halteelements gelagert ist, wobei die Lagerung des Gleitsteins in dem Langloch des Halteelements eine nötige Bewegungsfreiheit sowohl in Verdeckhochrichtung als auch in Verdecklängsrichtung ermöglicht.

Weitere Vorteile und vorteilhafte Ausführungen eines Soft-Top-Verdecks nach der Erfindung ergeben sich aus der Zeichnung und der Beschreibung.

Nachfolgend ist ein vorteilhaftes Ausführungsbeispiel eines erfindungsgemäßen Soft-Top-Verdecks anhand der Zeichnung prinzipmäßig beschrieben.

Es zeigt:
- Fig. 1: eine dreidimensionale Ansicht eines Soft-Top-Verdecks eines Cabriolet-Fahrzeugs, wobei das Soft-Top-Verdeck in einer einen Fahrgastraum überspannenden, geschlossenen Position gezeigt ist;
- Fig. 2: eine dreidimensionale Ansicht des Soft-Top-Verdecks der Fig. 1, wobei das Soft-Top-Verdeck ohne einen Verdeckbezug dargestellt ist;
- Fig. 3: eine vereinfachte dreidimensionale Darstellung des Soft-Top-Verdecks der Fig. 2, wobei das Soft-Top-Verdeck in einer den Fahrgastraum freigebenden offenen Position dargestellt ist;
- Fig. 4: eine Detailansicht eines Hauptlagers des Verdecks und eines in Verdeckfrontrichtung vorderen Endes eines Spannbügels mit seiner Festlegung an dem Hauptlager;
- Fig. 5: ein Ausschnitt eines in Verdeckfrontrichtung hinteren Endes des Spannbügels und eines Halteelements, mittels welchem der Spannbügel karosseriefest anordenbar ist, wobei der Spannbügel in einer Position bei geschlossenem Verdeck gezeigt ist;
- Fig. 6: ein der Fig. 5 entsprechender Ausschnitt des Spannbügels, wobei der Spannbügel in einer Position bei offenem Verdeck gezeigt ist;
- Fig. 7: eine vereinfachte dreidimensionale Darstellung des Spannbügels des Verdecks ohne den Verdeckbezug, wobei ersichtlich ist, dass der Spannbügel zweiteilig ausgebildet ist;
- Fig. 8: eine vereinfachte Schnittdarstellung durch den Spannbügel der Fig. 7 entlang der Schnittlinie A-A in Fig. 7, wobei zusätzlich der Verdeckbezug und weiter an einer Karosserie des Cabriolet-Fahrzeugs angeordnete Elemente ersichtlich sind; und
- Fig. 9: eine vereinfachte Schnittdarstellung durch den Spannbügel der Fig. 7 entlang der Schnittlinie B-B in Fig. 7, wobei neben dem Verdeckbezug auch eine Wassertasche ersichtlich ist.

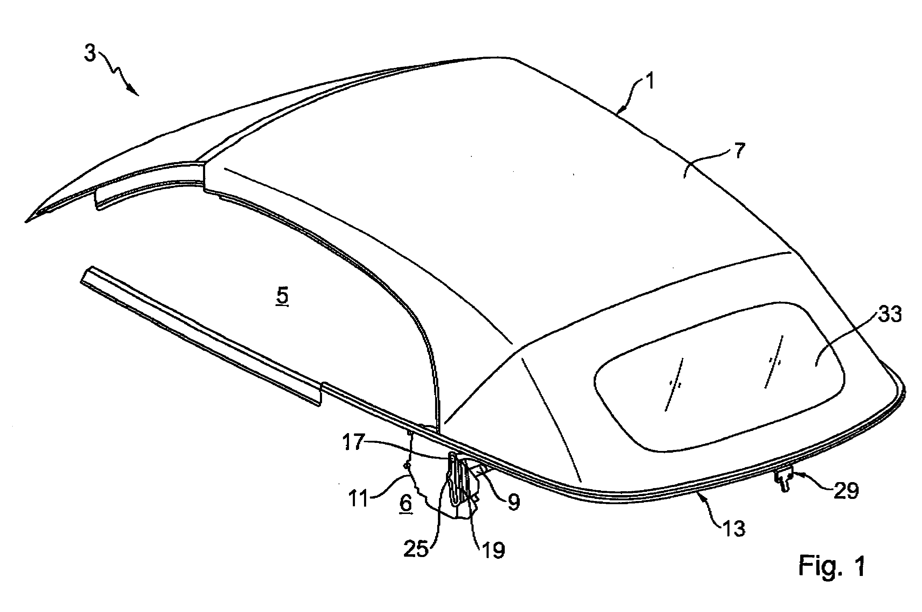

Die Figuren 1 bis 3 der Zeichnung zeigen ein als Soft-Top-Verdeck 1 ausgebildetes Verdeck eines Cabriolet-Fahrzeugs 3 ohne Verdeckkastendeckel, welches zwischen einer einen Fahrgastraum 5 abdeckenden geschlossenen Position und einer den Fahrgastraum 5 freigebenden offenen Position verfahrbar ist.

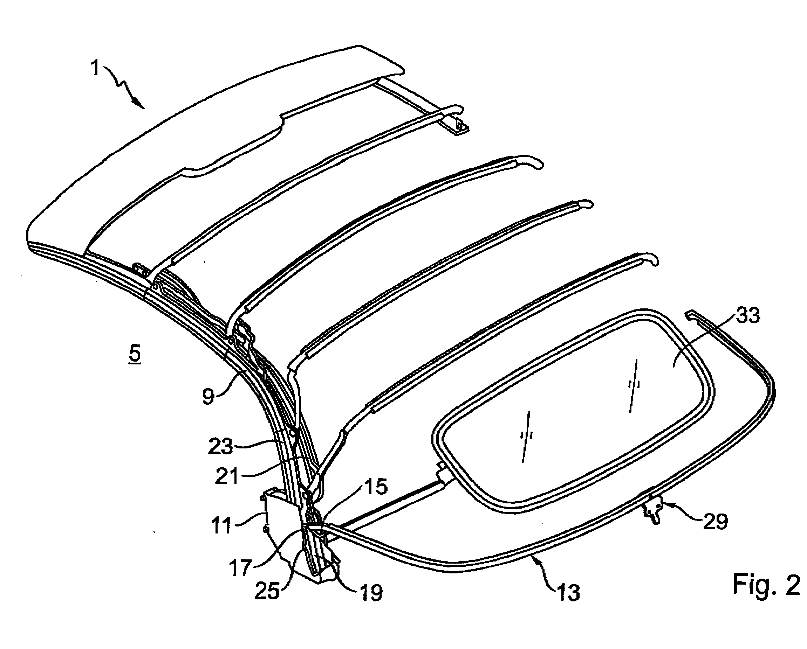

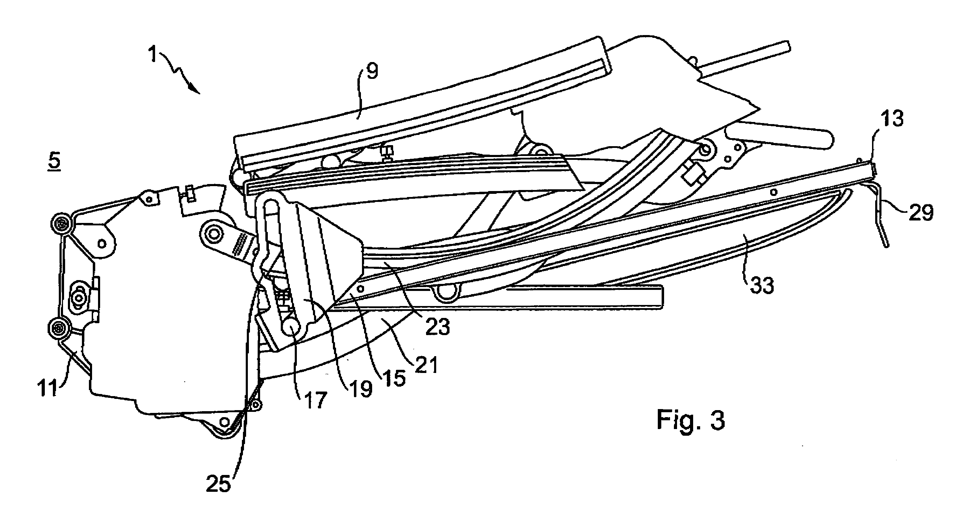

Zum Verfahren des Verdecks 1, welches in den Figuren 2 und 3 ohne einen Verdeckbezug 7 dargestellt ist, ist das Soft-Top-Verdeck 1 mit einem Verdeckgestänge 9 ausgebildet, welches über ein Hauptlager 11 an einer nur symbolisch angedeuteten Fahrzeugkarosserie 6 angeordnet ist. Das Soft-Top-Verdeck 1 kann dabei mittels eines nicht näher dargestellten Antriebs zwischen der in den Figuren 1 und 2 gezeigten geschlossenen Position und der in der Fig. 3 gezeigten offenen Position verfahren werden.

Das Soft-Top-Verdeck 1 weist einen Spannbügel 13 auf, mittels welchem der Verdeckbezug 7 des Soft-Top-Verdecks 1 in seiner geschlossenen Position in einer an der Karosserie 6 des Cabriolet-Fahrzeugs 3 anliegenden, gespannten Position gehalten ist.

Der vorliegend aus Stahl gefertigte und U-förmig ausgebildete Spannbügel 13 ist mit seinen verdeckfrontseitigen Enden 15 karosseriefest gelagert, wobei in den Figuren jeweils nur eine Lagerung auf einer in Verdeckfrontrichtung linken Seite des Soft-Top-Verdecks 1 gezeigt ist. In einer alternativen Ausgestaltung des Spannbügels könnte der Spannbügel 13 auch aus anderen Materialien, z.B. als Aluminiumbauteil, ausgeführt sein.

Bei dem vorliegenden Cabriolet-Fahrzeug 3 wird eine C-Säule 23 des Cabriolet-Fahrzeugs bei einer Überführung des Soft-Top-Verdecks 1 von seiner geschlossenen Position in seine offene Position so weit heckwärts verschwenkt, dass ein Abstand zwischen einem Hauptlenker 21 des Verdecks 1 und dem Spannbügel 13 in offener Position des Verdecks 1 größer ist als in geschlossener Position des Verdecks 1.

Um dabei eine zu starke Spannung des Verdeckbezugs 7 zu verhindern, ist der Spannbügel 13 mit seinen verdeckfrontseitigen Enden 15, von denen das in Verdeckfrontrichtung linke Ende 15 im Folgenden stellvertretend für das baugleiche, in Verdeckfrontrichtung rechte Ende des Spannbügels 13 beschrieben wird, mittels eines ersten Gleitsteins 17 in einer an dem Hauptlager 11 angeordneten Kulissenführung 19 gelagert. Der Spannbügel 13 wird bei einer Überführung des Soft-Top-Verdecks 1 mit seinem verdeckfrontseitigen Ende 15 in der Kulissenführung 19 von einer oberen Position in eine untere Position bewegt, wobei hierdurch eine Spannungsreduktion an dem Verdeckbezug 7 erreicht wird.

Bei einer Überführung des Soft-Top-Verdecks 1 von seinem offenen Zustand in seinen geschlossenen Zustand wird der erste Gleitstein 17 des Spannbügels 13 von seiner unteren Position in der Kulissenführung 19 in seine obere Position in der Kulissenführung 19 bewegt, wobei diese Bewegung durch eine Stoffspannung des Verdeckbezugs 7 umgesetzt wird.

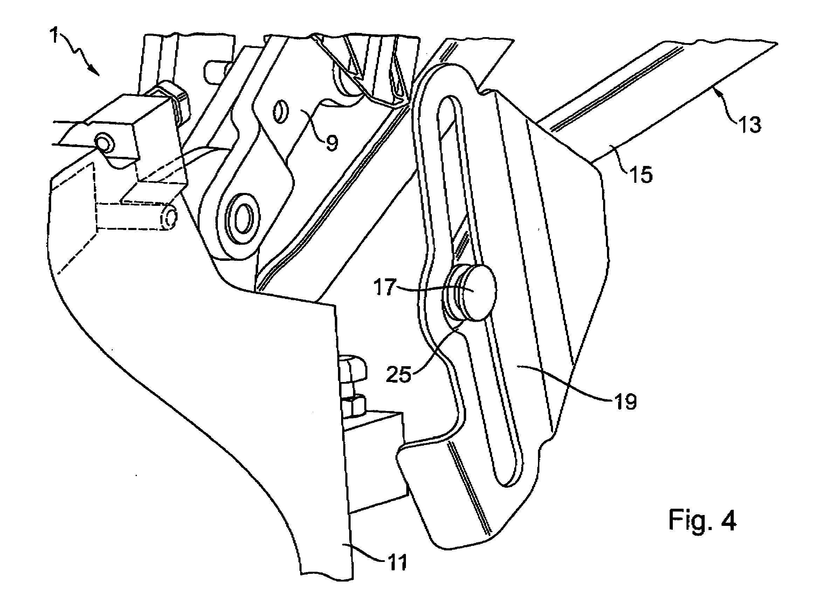

Die in den Figuren 3 und 4 näher ersichtliche Kulissenführung 19 weist in einem mittigen verdeckfrontseitigen Bereich eine Ausbuchtung 25 auf, welche vorgesehen ist, um den ersten Gleitstein 17 des Spannbügels 13 bei einer Montage des Soft-Top-Verdecks 1 einfach in die vorliegend etwa 13 cm lange und im Wesentlichen in Verdeckhochrichtung verlaufende Kulissenführung 19 einführen zu können. Da der Spannbügel 13 in einem Gebrauchszustand in Verdeckheckrichtung belastet ist, besteht keine Gefahr, dass der erste Gleitstein 17 des Spannbügels 13 in einem Gebrauchszustand des Soft-Top-Verdecks 1 über die Ausbuchtung 25 der Kulissenführung 19 aus der Kulissenführung 19 gleitet.

Analog zu der in den Figuren gezeigten Lagerung des Spannbügels 13 mit seinem in Verdeckfrontrichtung linken verdeckfrontseitigen Endes 15 über den ersten Gleitstein 17 in der Kulissenführung 19, ist der Spannbügel 13 mit einem nicht näher ersichtlichen in Verdeckfrontrichtung rechten frontseitigen Ende über einen weiteren Gleitstein in einer an einem in Verdeckfrontrichtung rechten Hauptlager des Soft-Top-Verdecks 1 gelagert.

In einem verdeckheckseitigen mittigen Bereich des Spannbügels 13 ist an einer in Verdeckfrontrichtung weisenden Seite des Spannbügels 13 ein zweiter Gleitstein 27 angeordnet, welcher mit einem karosseriefest festlegbaren Halteelement 29 zusammenwirkt. Das Halteelement 29 weist hierzu eine Nase 30 auf, mittels welcher das Haltelement 29 in eine entsprechende Ausnehmung der Karosserie 6 einführbar ist und mittels Schrauben durch die Bohrungen 32 an der Karosserie 6 festlegbar ist.

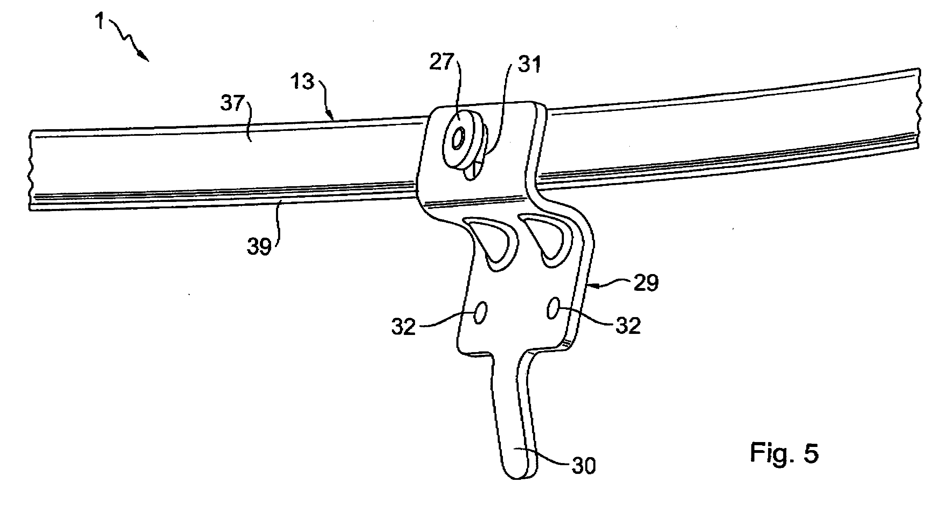

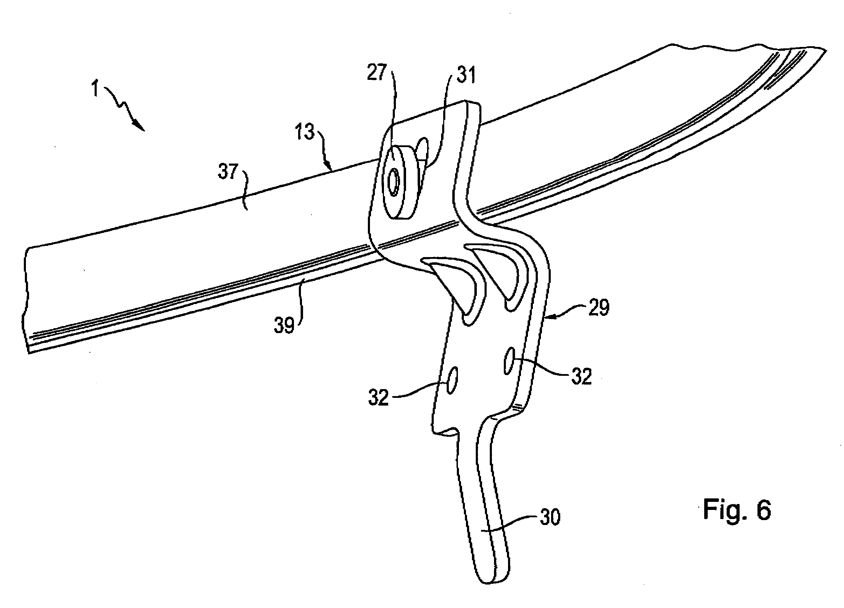

Der zweite Gleitstein 27 ist dabei derart in einem wenigstens annähernd in Verdeckhochrichtung verlaufendem Langloch 31 des Halteelements 29 mit einem Spiel in Verdeckfrontrichtung angeordnet, dass der Spannbügel 13 mit seinem zweiten Gleitstein 27 bei einer Überführung des Soft-Top-Verdecks 1 von seiner geschlossenen Position in seine offenen Position von seiner in der Fig. 5 gezeigten Position in seine in der Fig. 6 gezeigte Position verkippt werden kann.

Neben der begrenzten Stofflänge des Verdeckbezugs 7 zwischen dem Hauptlenker 21 und der C-Säule 23, ist auch die Stofflänge des Verdeckbezugs 7 zwischen unteren Ecke einer Heckscheibe 33 und den entsprechenden verdeckfrontseitigen Enden 15 des Spannbügels 13 relativ kurz.

Um auch in diesem Bereich auf den Verdeckbezug 7 wirkende Belastungsspitzen bei einer Überführung des Verdecks zwischen seiner geschlossenen Position und seiner offenen Position zu reduzieren, ist der Verdeckbezug 7 in Verschiebebereichen 35 des Spannbügels 13 in Erstreckungsrichtung des Spannbügels 13 lose mit dem Spannbügel 13 verbunden.

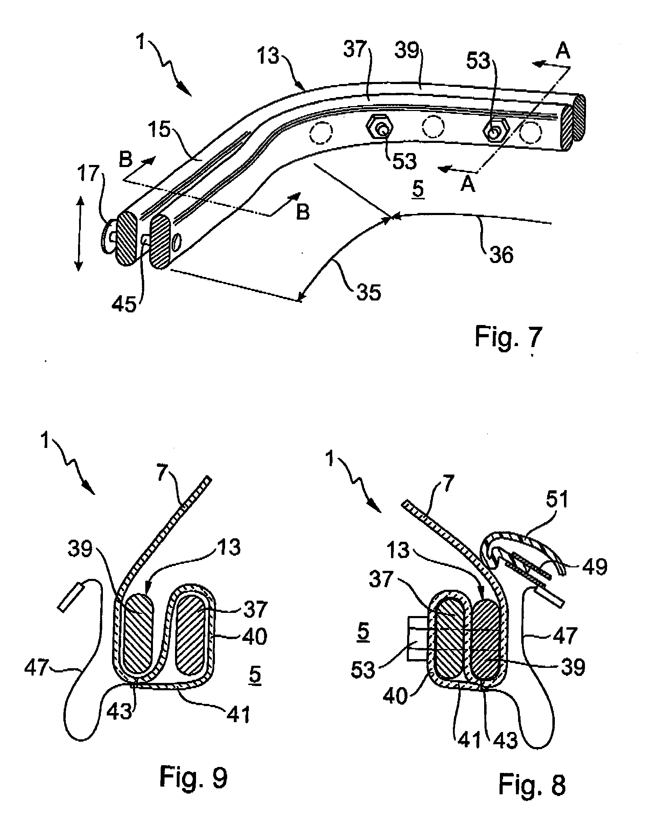

Die Verschiebebereiche 35, von denen in der Fig. 7 nur der einer rechten Verdeckseite zugeordnete Verschiebebereich 35 ersichtlich ist und der im Folgenden stellvertretend für einen nicht näher ersichtlichen, der linken Verdeckseite zugeordneten Verschiebebereich des Spannbügels 13 beschrieben wird, sind in den verdeckfrontseitigen Enden 15 des Spannbügels 13 zugewandten Bereichen des Spannbügels 13 angeordnet, wobei sich ein im Bereich des verdeckfrontseitigen Endes 15 des Spannbügels 13 befindlicher Teil des Verdeckbezugs 7 bei einer Verdecköffnungsbewegung in Richtung Verdeckheckrichtung analog zu einem Schlaufenvorhang an einer Vorhangstange bewegen kann.

Zwischen den Verschiebebereichen 35 ist der Verdeckbezug 7 in einem Fixierbereich 36 fest, d. h. in Erstreckungsrichtung des Spannbügels 13 unbeweglich mit diesem verbunden, so dass der Verdeckbezug 7 in diesem verdeckmittigen Fixierbereich 36 eine definierte Position gegenüber dem Spannbügel 13 einnimmt. Dies ist insbesondere deshalb vorteilhaft, da hierdurch die in dem Verdeckbezug 7 eingebundene Heckscheibe 33 bei einer Verdecköffnungs- oder schließbewegung nicht verkippen kann.

Der Spannbügel 13 ist zweiteilig, mit zwei im Wesentlichen parallel zueinander verlaufenden Spannbügelteilen 37, 39 ausgebildet. Ein erster Spannbügelteil 37 ist dem Fahrgastraum 5 zugewandt und ein zweiter Spannbügelteil 39 dem Fahrgastraum 5 abgewandt. In dem Verbindungsbereich 35 des Spannbügels 13 ist der erste Spannbügelteil 37 über eine S-förmige Ausgestaltung des ersten Spannbügelteils 37 in Richtung Verdeckmitte gegenüber dem zweiten Spannbügelteil 39 verlagert, so dass der erste Spannbügelteil 37 in dem Verbindungsbereich 35 des Spannbügels 13 von dem zweiten Spannbügelteil 39 beabstandet angeordnet ist.

Wie in der Fig. 8 gemäß einem Schnitt durch den Spannbügel 13 entlang A-A und der Fig. 9 gemäß einem Schnitt durch den Spannbügel 13 entlang B-B mit zusätzlicher Darstellung des Verdeckbezugs 7 ersichtlich ist, umschlingt der Verdeckbezug 7 den ersten Spannbügelteil 37 vollständig. Der Verdeckbezug 7 ist an einer dem Fahrgastraum 5 abgewandten Seite des zweiten Spannbügelteils 39 vorbeigeführt, läuft unten um den zweiten Spannbügelteil 39 und dann zwischen den Spannbügelteilen 37, 39 nach oben. Von hier aus verläuft der Verdeckbezug 7 oben um den ersten Spannbügelteil 37 auf einer dem Fahrgastraum 5 zugewandeten Seite des ersten Spannbügelteils 37 wieder nach unten und von dort zurück in Richtung des zweiten Spannbügelteils 39. Der Verdeckbezug 7 bildet somit eine den ersten Spannbügelteil 37 umfassende Tasche bzw. Schlaufe 40.

Ein Endbereich 41 des Verdeckbezugs 7 ist unterhalb des Spannbügels 13 in einem Bereich des zweiten Spannbügelteils 39 mittels einer als Schweißnaht 43 ausgebildeten Naht fest mit dem Verdeckbezug 7 verbunden.

Durch die Anordnung der Schweißnaht 43 unterhalb des Spannbügels 13 ist diese optisch häufig unerwünschte Naht von außen immer unsichtbar, so dass vorteilhafterweise keine Anordnung weiterer Elemente zum Verdecken der Schweißnaht 43 vorgesehen werden müssen oder vorhandene Elemente konstruktiv nicht zur Verdeckung der Schweißnaht 43 angepasst und abgeändert werden müssen.

Durch die unterhalb des Spannbügels 13 angeordnete Schweißnaht 43 kann der Spannbügel 13 gegenüber einer herkömmlich angeordneten Schweißnaht vorteilhafterweise nah an einer Karosserieöffnungslinie angeordnet werden, wodurch Bauraum eingespart werden kann.

Der Verdeckbezug 7 umschlingt den Spannbügel 13 vorliegend in den Verschiebebereichen 35 genauso fest wie in dem dazwischenliegenden Fixierbereich 36, in welchem - wie z.B. der Fig. 8 zu entnehmen ist - der Verdeckbezug mittels Schrauben 53 zwischen dem ersten Spannbügelteil 37 und dem zweiten Spannbügelteil 39 befestigt ist, wobei zudem der erste Spannbügelteil 37 mit dem zweiten Spannbügelteil 39 über die Schrauben 53 fest verbunden ist.

In einer alternativen Ausbildung der Erfindung kann es auch vorgesehen sein, dass der Verdeckbezug den Spannbügel in den Verschiebebereichen lockerer umschlingt als in dem Fixierbereich um eine einfachere Verschiebbarkeit des Verdeckbezugs in den Verschiebebereichen zu ermöglichen.

Der erste Gleitstein 17 ist an einer dem Fahrgastraum 5 abgewandten Seite des zweiten Spannbügelteils 39 angeordnet und bildet neben seiner Lagerung in der Kulissenführung 19 eine Begrenzungseinrichtung für den Verdeckbezug 7. Dabei verbindet der erste Gleitstein 17 mit einem Stiftteil 45 den ersten Spannbügelteil 37 mit dem zweiten Spannbügelteil 39 im Bereich des verdeckfrontseitigen Endes 15 des Spannbügels 13. Hierdurch wird einerseits verhindert, dass sich der Verdeckbezug 7 über das verdeckfrontseitige Ende 15 des Spannbügels 13 hinausbewegt, und andererseits wird durch die Verbindung der Spannbügelteile 37, 39 die Stabilität des Spannbügels 13 erhöht.

Wie in den Figuren 8 und 9 ersichtlich ist, ist bei der gezeigten Ausführung über die Schweißnaht 43 zudem eine Wassertasche 47 an dem Verdeckbezug 7 angebunden, welche an einem dem Verdeckbezug 7 abgewandten Ende an einer an der Fahrzeugkarosserie aufgesteckten Schachtleiste 49 im Bereich einer Karosseriedichtlinie angebunden ist. Durch die Wassertasche 47 wird verhindert, dass Flüssigkeit in den Fahrgastraum 5 oder einen anderen Fahrzeuginnenraum eindringen kann.

An der Schachtleiste 49 ist weiterhin eine Staubschutzlippe 51 angebunden, welche im Bereich der Karosseriedichtlinie größere Schmutzteile von einem Eindringen in die Wassertasche 47 abhält.

## Patentansprüche

1. Soft-Top-Verdeck eines Cabriolet-Fahrzeugs (3), welches zwischen einer einen Fahrgastraum (5) überdeckenden, geschlossenen Position und einer den Fahrgastraum (5) freigebenden, offenen Position verfahrbar ist, wobei ein Verdeckbezug (7) wenigstens bereichsweise in Erstreckungsrichtung eines Spannbügels (13) in wenigstens einem Verschiebebereich (35) des Spannbügels (13) verschiebbar an dem Spannbügel (13) angeordnet ist,
**dadurch gekennzeichnet,**
**dass** die Verschiebbarkeit des Verdeckbezugs (7) in dem wenigstens einen Verschiebebereich (35) des Spannbügels (13) ausschließlich durch eine wenigstens einen Teil (37) des Spannbügels (13) vollständig umfassende Umschlingung des Spannbügels (13) mit dem Verdeckbezug (7) realisiert ist.

2. Soft-Top-Verdeck nach Anspruch 1,
**dadurch gekennzeichnet,**
**dass** wenigstens ein Verschiebebereich (35) des Spannbügels (13) im Bereich eines verdeckfrontseitigen Endes (15) des Spannbügels (13) angeordnet ist.

3. Soft-Top-Verdeck nach einem der Ansprüche 1 oder 2,
**dadurch gekennzeichnet,**
**dass** der Spannbügel (13) in wenigstens einem Verschiebebereich (35) lockerer von dem Verdeckstoff (7) umschlungen ist als in einem Fixierbereich (36) des Spannbügels (13), in welchem der Verdeckstoff (7) in Erstreckungsrichtung des Spannbügels (13) fest an dem Spannbügel (13) angeordnet ist.

4. Soft-Top-Verdeck nach einem der Ansprüche 1 bis 3,
**dadurch gekennzeichnet,**
**dass** der Spannbügel (13) zweiteilig mit zwei im Wesentlichen parallel zueinander verlaufenden Spannbügelteilen (37, 39) ausgebildet ist, wobei ein erster Spannbügelteil (37) dem Fahrgastraum (5) zugewandt und ein zweiter Spannbügelteil (39) dem Fahrgastraum (5) abgewandt und von dem ersten Spannbügelteil (37) wenigstens in dem Verschiebebereich (35) des Spannbügels (13) beabstandet angeordnet ist, und wobei das erste Spannbügelteil (37) von dem Verdeckbezug (7) vollständig umschlungen ist.

5. Soft-Top-Verdeck nach Anspruch 4,
**dadurch gekennzeichnet,**
**dass** die Spannbügelteile (57,39) im Bereich eines verdeckfrontseitigen Endes (15) des Spannbügels (13) über eine starre Verbindungseinrichtung (45,17) verbunden sind, welche vorzugsweise zugleich der Anbindung des Spannbügels (13) an eine Fahrzeugkarosserie (6) dient.

6. Soft-Top-Verdeck nach einem der Ansprüche 1 bis 5,
**dadurch gekennzeichnet,**
**dass** eine ein Ende (41) des Verdeckbezug (7) nach Umschlingung des ersten Spannbügelteils (37) an dem Verdeckbezug (7) festlegende Naht (43) unterhalb des Spannbügels (13) angeordnet ist.

7. Soft-Top-Verdeck nach Anspruch 6,
**dadurch gekennzeichnet,**
**dass** die Naht (43) als Schweißnaht ausgebildet ist.

8. Soft-Top-Verdeck nach einem der Ansprüche 1 bis 7,
**dadurch gekennzeichnet,**
**dass** an wenigstens einem verdeckfrontseitigen Ende (15) des Spannbügels (13) eine Begrenzungseinrichtung (17) vorgesehen ist, mit der eine Bewegung des Verdeckbezugs (7) über das verdeckfrontseitige Ende (15) des Spannbügels (13) hinaus verhindert ist.

9. Soft-Top-Verdeck nach einem der Ansprüche 1 bis 8,
**dadurch gekennzeichnet,**
**dass** in einem dem Fahrgastraum (5) abgewandten Bereich des Spannbügels (13) eine Wassertasche (47) an dem Verdeckbezug (7) angeordnet ist.

10. Soft-Top-Verdeck nach einem der Ansprüche 1 bis 9,
**dadurch gekennzeichnet,**
**dass** der Spannbügel (13) mit wenigstens einem verdeckfrontseitigen Ende (15) karosseriefest angeordnet und bei einer Überführung des Verdecks (1) von seiner geschlossenen Position in seine offene Position mit seinen verdeckfrontseitigen Enden (15) nach unten verlagerbar ist.

11. Soft-Top-Verdeck nach Anspruch 10,
**dadurch gekennzeichnet,**
**dass** der Spannbügel (13) bei einer Überführung des Verdecks (1) zwischen seiner geschlossenen Position und seiner offenen Position mit wenigstens einem Gleitstein (17) in einer karosseriefest angeordneten Kulissenführung (19) gelagert ist.

12. Soft-Top-Verdeck nach einem der Ansprüche 10 oder 11,
**dadurch gekennzeichnet,**
**dass** die Schwerkraft den Spannbügel (13) bei einer Überführung des Verdecks (1) von seinem geschlossenen Zustand in seinen offenen Zustand von einer oberen Position in eine unter Position verlagert ist und der Spannbügel (13) bei einer Überführung des Verdecks (1) von seinem offenen Zustand in seinen geschlossenen Zustand mittels einer Stoffspannung des Verdeckbezugs (7) in seine obere Position in der Kulissenführung (19) verlagert ist.

13. Soft-Top-Verdeck nach einem der Ansprüche 1 bis 12,
**dadurch gekennzeichnet,**
**dass** der Spannbügel (13) an seinem verdeckheckseitigen Ende in einem wenigstens annähernd verdeckmittigen Bereich mittels eines Halteelements (29) karosseriefest festgelegt ist.

14. Soft-Top-Verdeck nach Anspruch 13,
**dadurch gekennzeichnet,**
**dass** der Spannbügel (13) mittels eines Gleitsteins (27) in einem wenigstens annähernd in Verdeckhochrichtung verlaufenden Langloch (31) des Halteelements (29) gelagert ist.

## Claims

1. A soft top hood for a convertible vehicle (3), which is displaceable between a closed position covering a passenger compartment (5) and an open position uncovering said passenger compartment (5), wherein a hood cover (7) is arranged on a tensioning bow (13) to be at least partially displaceable in the direction of extension of the tensioning bow (13) in at least one displacement region (35) of the tensioning bow (13), **characterised in that** the displaceability of the hood cover (7) in said at least one displacement region (35) of the tensioning bow (13) is realized exclusively by the hood cover (7) being completely wrapped around at least a part (37) of the tensioning bow (13).

2. The soft top hood according to claim 1, **characterised in that** at least one displacement region (35) of the tensioning bow (13) is arranged in the region of an end (15) of the tensioning bow (13) facing the hood-front.

3. The soft top hood according to any one of claims 1 or 2, **characterised in that** the hood fabric (7) is wrapped around the tensioning bow (13) more loosely in at least one displacement region (35) than in a fixing region (36) of the tensioning bow (13), in which the hood fabric (7) is fixedly arranged on the tensioning bow (13) in the direction of extension of the tensioning bow (13).

4. The soft top hood according to any one of claims 1 to 3, **characterised in that** the tensioning bow (13) has a two-part design comprising two substantially parallel tensioning bow parts (37, 39), wherein a first tensioning bow part (37) is turned towards the passenger compartment (5) and a second tensioning bow part (39) is turned away from the passenger compartment (5) and is spaced apart from the first tensioning bow part (37) at least in the displacement region (35) of the tensioning bow (13), and wherein the hood cover (7) is completely wrapped around the first tensioning bow part (37).

5. The soft top hood according to claim 4, **characterised in that** the tensioning bow parts (57, 39) are connected in the region of an end (15) of the tensioning bow (13) facing the hood-front, via a rigid connection means (45, 17), which preferably serves simultaneously to connect the tensioning bow (13) to a vehicle body (6).

6. The soft top hood according to any one of claims 1 to 5, **characterised in that** a seam (43) is arranged below the tensioning bow (13) to fix one end (41) of the hood cover (7) to the hood cover (7) after being wrapped around the first tensioning bow part (37).

7. The soft top hood according to claim 6, **characterised in that** the seam (43) is provided as a weld.

8. The soft top hood according to any one of claims 1 to 7, **characterised in that** a limiting means (17) is provided at at least one end (15) of the tensioning bow (13) facing the hood-front, said limiting means (17) preventing a movement of the hood cover (7) beyond the end (15) of the tensioning bow (13) facing the hood-front.

9. The soft top hood according to any one of claims 1 to 8, **characterised in that** a water pocket (47) is arranged on the hood cover (7) in a region of the tensioning bow (13) turned away from the passenger compartment (5).

10. The soft top hood according to any one of claims 1 to 9, **characterised in that** the tensioning bow (13) is fixed to the vehicle body by at least one end (15) facing the hood-front and is downwardly displaceable at its ends (15) facing the hood-front when moving the hood (1) from its closed position to its open position.

11. The soft top hood according to claim 10, **characterised in that**, when moving the hood (1) between its closed position and its open position, the tensioning bow (13) is supported by at least one sliding block (17) in a guide slot (19), fixed with respect to the vehicle body.

12. The soft top hood according to any one of claims 10 or 11, **characterised in that** gravity moves the tensioning bow (13) from an upper position to a lower position when moving the hood (1) from its closed state to its open state, and the tensioning bow (13) is moved into its upper position in the guide slot (19) by tightening the fabric of the hood cover (7) when moving the hood (1) from its open state to its closed state.

13. The soft top hood according to any one of claims 1 to 12, **characterised in that** the end of the tensioning bow (13) facing the hood-rear is fixed to the vehicle body by means of a retaining element (29) in a region located at least approximately in the middle of the hood.

14. The soft top hood according to claim 13, **characterised in that** the tensioning bow (13) is supported in an oblong hole (31) of the retaining element (29) by means of a sliding block (27), said oblong hole (31) extending at least approximately in the vertical direction of the hood.

## Revendications

1. Capote d'un véhicule cabriolet (3), qui est déplaçable entre une position fermée recouvrant un habitacle (5) et une position ouverte découvrant ledit habitacle (5), un recouvrement de capote (7) étant disposé sur un étrier de tension (13) de manière à être déplaçable au moins partiellement dans la direction d'extension de l'étrier de tension (13) dans au moins une région de déplacement (35) de l'étrier de tension (13), **caractérisé en ce que** le déplacement du recouvrement de capote (7) dans ladite au moins une région de déplacement (35) de l'étrier de tension (13) est réalisé exclusivement par enroulement complet du recouvrement de capote (7) autour d'au moins une partie (37) de l'étrier de tension (13).

2. Capote selon la revendication 1, **caractérisé en ce qu'**au moins une région de déplacement (35) de l'étrier de tension (13) est disposée dans la région d'une extrémité (15) de l'étrier de tension (13) située à la face avant de la capote.

3. Capote selon l'une quelconque des revendications 1 ou 2, **caractérisé en ce que** le recouvrement de capote (7) est enroulé autour de l'étrier de tension (13) d'une manière plus lâche dans au moins une région de déplacement (35) que dans une région de fixation (36) de l'étrier de tension (13), dans laquelle le recouvrement de capote (7) est disposé de manière fixe sur l'étrier de tension (13) dans la direction d'extension de l'étrier de tension (13).

4. Capote selon l'une quelconque des revendications 1 à 3, **caractérisé en ce que** l'étrier de tension (13) est réalisé en deux parties (37, 39) sensiblement parallèles, dont une première partie (37) est tournée vers l'habitacle (5) et une deuxième partie (39) est détournée de l'habitacle (5) et espacée de la première partie d'étrier de tension (37) au moins dans la région de déplacement (35) de l'étrier de tension (13), et le recouvrement de capote (7) est enroulé complètement autour de la première partie (37) de l'étrier de tension.

5. Capote selon la revendication 4, **caractérisé en ce que** les parties (57, 39) de l'étrier de tension sont reliées dans la région d'une extrémité (15) de l'étrier de tension (13) disposée à la face avant de la capote par un moyen de liaison (45, 17) rigide qui sert de préférence en même temps à relier l'étrier de tension (13) à une carrosserie (6).

6. Capote selon l'une quelconque des revendications 1 à 5, **caractérisé en ce qu'**une jointure (43) est disposée au-dessous de l'étrier de tension (13) afin de fixer une extrémité (41) du recouvrement de capote (7) audit recouvrement de capote (7) après son enroulement autour de la première partie (37) de l'étrier de tension.

7. Capote selon la revendication 6, **caractérisé en ce que** ladite jointure (43) est réalisée sous forme d'une soudure.

8. Capote selon l'une quelconque des revendications 1 à 7, **caractérisé en ce que** l'on prévoit un moyen de limitation (17) à au moins une extrémité (15) de l'étrier de tension (13) disposée à la face avant de la capote, ledit moyen de limitation (17) supprimant un mouvement du recouvrement de capote (7) au-delà de l'extrémité (15) de l'étrier de tension (13) située à la face avant de la capote.

9. Capote selon l'une quelconque des revendications 1 à 8, **caractérisé en ce qu'**une poche à eau (47) est disposée sur le recouvrement de capote (7) dans une région de l'étrier de tension (13) détournée de l'habitacle (5).

10. Capote selon l'une quelconque des revendications 1 à 9, **caractérisé en ce que** l'étrier de tension (13) est monté fixe sur la carrosserie par au moins une extrémité (15) disposée à la face avant de la capote et **en ce qu'**il est déplaçable vers le bas par ses extrémités (15) disposées à la face avant de la capote lors d'un déplacement de la capote (1) de sa position fermée vers sa position ouverte.

11. Capote selon la revendication 10, **caractérisé en ce que**, lors d'un déplacement de la capote (1) entre sa position fermée et sa position ouverte, l'étrier de tension (13) est supporté par au moins une clavette de guidage (17) dans un guide de coulisse (19) monté fixe sur la carrosserie.

12. Capote selon l'une quelconque des revendications 10 ou 11, **caractérisé en ce que** la gravité déplace l'étrier de tension (13) d'une position supérieure vers une position inférieure lors d'un déplacement de la capote (1) de son état fermé vers son état ouvert, et l'étrier de tension (13) est déplacé vers sa position supérieure dans le guide de coulisse (19) par serrage du recouvrement de capote (7) lors d'un déplacement de la capote (1) de son état ouvert vers son état fermé.

13. Capote selon l'une quelconque des revendications 1 à 12, **caractérisé en ce que** l'étrier de tension (13) est monté fixe sur la carrosserie, par son extrémité disposée à l'arrière de la capote, dans une région située au moins environ au centre de la capote au moyen d'un élément de retenue (29).

14. Capote selon la revendication 13, **caractérisé en ce que** l'étrier de tension (13) est supporté dans un trou oblong (31) de l'élément de retenue (29) au moyen d'une clavette de guidage (27), ledit trou oblong (31) s'étendant au moins environ en direction verticale de la capote.
